# EUROPEAN PATENT APPLICATION

(11) **EP 0 583 926 A2**
(43) Date of publication of application: **23.02.1994**
(21) Application number: 93306251.5
(22) Date of filing: 06.08.1993
(51) Int. Cl.: C08F 265/06, C08L 51/00

(54) **Acrylic thermoplastic elastomer**

(30) Priority: 18.08.1992 US 931759
(71) Applicant: ROHM AND HAAS COMPANY, Philadelphia Pennsylvania 19105 (US)
(72) Inventor: Makower, Samuel Jack, Elkins Park, Pennsylvania 19117 (US); Kopchik, Richard Michael, Southampton, Pennsylvania 18966 (US)
(74) Representative: Angell, David Whilton

(57) **Abstract**

Acrylic thermoplastic elastomers exhibiting good weathering, good colorability, and a useful balance of tensile and elongation properties when molded into articles may be prepared from emulsion polymer particles with hard methacrylate-rich domains in a continuous polyacrylate network by a novel process which avoids the formation of either core/shell particle or an interpenetrating polymer network.

## Description

This invention is concerned with acrylic thermoplastic elastomers which may be molded or extruded articles.

Thermoplastic elastomers have become well-known to the plastics and elastomers art, in that they offer the moldability and reprocessability of thermoplastics technology combined with the elastic properties of a conventional thermoset rubber. There are many varieties of thermoplastic elastomers, (which we will abbreviate to "TPEs"). A useful reference to the many types is found in N. R. Legge et al, "Thermoplastic Elastomers," (1987), Hanser Publishers, Vienna (distributed in US by Macmillan Publishing, New York). Legge's book gives no reference to thermoplastic elastomers based on acrylic monomers, even though it would be expected that such should have excellent resistance to weathering. Other recent reference books on thermoplastic elastomers are also silent on the subject of acrylic thermoplastic elastomers.

Very little is taught in the prior art relevant to thermoplastic elastomers of high acrylic ester content. Falk et al., US-A-4,473,679, teach a multi-stage core/shell composition having a rubbery acrylic shell as being useful as a TPE. Peascoe, in EP-A-295,562, teaches a crosslinked (meth)acrylate ester rubbery phase and an interpenetrating crosslinked styrenic resin phase. Frankel et al., US-A-4,814,373 teach elastomeric acrylic gumstocks which can be extruded from coagulated latices of crosslinked domains formed within a lightly crosslinked or non-crosslinked acrylate ester first-stage particle. Koller et al., US-A-5,066,708, teach polymers similar to those of Frankel et al. useful as damping compositions.

There exist a number of patents and papers which address the morphology which can be obtained in multi-stage emulsion polymerization. In general, these claim either a core/shell structure or an interpenetrating network of the two phases, at least one phase being cross-linked. With the exception of the Falk et al. reference, there has been no showing that the core/shell structure produces attractive thermoplastic elastomers having properties such as disclosed in the present invention. Rather, the core/shell polymers are described as being impact-imparting rubbers encased in a hard shell which enables ease of isolation by spray- drying or coagulation and also compatibility with the matrix to be impact-modified. The properties of rubber-rich core/shell polymers per se are far less attractive as regards moldable toughened elastic articles, and do not offer the elongation and tensile values required to be useful in the TPE marketplace.

Owens, US-A-3,808,180, should be consulted for an excellent description of the emulsifiers, graft-linking monomers, cross-linking monomers, initiators, and the like, useful in making staged (meth)acrylic emulsion polymers, although Owens never teaches or discloses the utility of any of his compositions or TPEs.

As used herein, the term "interpenetrating network" generally means that synthetic conditions are controlled so that a second-stage polymer, i.e., that formed by addition of a second monomer, does not encapsulate a first-stage polymer, but rather polymerizes within to form a mixture where both polymers exist in a co-continuous fashion. However, those truly interpenetrating structures taught in the prior art will tend to perform more like a copolymer of the two monomers and will not allow the harder polymer stage fully to reinforce the blend at use temperatures, which results in polymers with poorer elongation, as well as adversely affecting the low temperature properties. It is the establishment of a domain structure of the hard polymer within the poly(alkyl acrylate) first-stage network that achieves the best balance of properties desired as an elastomer. Sperling, in discussions of interpenetrating network phase continuity (see Manson and Sperling, "Polymer Blends and Composites", section 8.8.2, pps 266-269 (1976) and Intern. J. Polymeric Mater., 1, 331 (1972)) suggests that technology could exist to form such domains (in his terminology, "cellular structure") within a polymer particle which also could exhibit core/shell morphology, but he has not shown experimentally that such structures can be formed nor has he taught how to accomplish such structures, let alone domains without core/shell structure by a process which does not involve latex swelling.

It is further known to one skilled in the art of multi-stage emulsion polymerization that a second-stage polymer of methyl methacrylate or a copolymer rich in units derived from methyl methacrylate has a strong leniency to form core/shell structures. The method taught in EP-A-295562 for a second-stage polymer of styrene is not adequate to keep a methyl methacrylate-rich second-stage monomer mixture from polymerizing as a core/shell structure. The method taught by Frankel et al. will accomplish the desired structure, but at the cost of relatively high concentrations of expensive cross-linking monomers in the second stage and a commercially unattractive equilibration time prior to initiation of polymerization of the second stage monomers. Koller et al. does not restrict to equilibration but continues to teach the necessity of high levels of expensive crosslinking monomer in the second stage.

Kitagawa et al. in EP-A-443,864, teach an acrylic multi-stage polymer which performs as a thermoplastic elastomer, but the second stage polymer must contain expensive maleimide units and a chain transfer agent. Further, Kitagawa et al. teach that their TPEs have an "island-in-the-sea" structure wherein the "islands" or domains are the cross-linked acrylate portion of the structure, so that their morphology varies from that of the present invention. Nowhere do Kitagawa et al. teach the knowledge of or a method to prepare a TPE based on methyl methacrylate homopolymer or methyl methacrylate copolymerized with another vinyl monomer in the absence of maleimide monomer.

This invention is addressed to the provision of an attractive synthesis route for preparing a thermoplastic elastomer in which a very high percentage of all reinforcing units are derived from (meth)acrylic esters and which has utility as a useful material to meet specific needs in the expanding TPE market.

We have discovered an acrylic thermoplastic elastomer in the form of a molded or extruded object, said elastomer being comprised of at least 45 weight percent of units derived from butyl acrylate and of at least 7 weight percent of units derived from methyl methacrylate, said elastomer having the following properties as measured (at room temperature, except for brittle temperature) by known ASTM test methods:
a. compression set less than 40 (percent) by ASTM D-395-85;
b. tensile strength, as determined by ASTM D-638-89, at least about 550 psi (3800 kPa);
c. tensile elongation, as determined by ASTM D-638-89, of at least 300 %, preferably from about 400 to about 700 %;
d. a brittle temperature, otherwise called a Clash-Berg temperature as determined by ASTM D-1043-87, below about -20°C, preferably below about -35°C,

the acrylic TPE being formed from an assemblage of multi-stage emulsion-prepared polymer particles, the first stage being a polymer predominately (more than 50% by weight) of units derived from butyl acrylate and containing at least 2 to about 10 weight percent of units derived from a copolymerizable unsaturated carboxylic acid, the second-stage polymer being formed in the presence of the first-stage polymer in the absence of any equilibration of the monomers which polymerize to form the second-stage polymer and the first-stage polymer prior to initiation of polymerization of the monomers which polymerize to form the second-stage polymer, the second-stage polymer being formed as cross-linked domains within the first polymer matrix, the second-stage polymer being less than about 40 parts by weight of the total stages of the emulsion polymer particle, the second-stage polymer being free of units derived from maleimide or its N-substituted derivatives, and the second polymer containing less than about five weight percent of units derived from of at least one polyunsaturated monomer.

We have further discovered means for preparing such TPEs which exhibit transparency, as measured by ASTM-D-1003 TWLT test, of greater than 35 %, useful for improved coloration and the like, by lowering the particle size of the emulsion particles to about 200 nm or less. Such TPEs may further contain at least one of filler, plasticizer, anti-oxidant, anti-ozonant, ultraviolet stabilizer, pigment or dye, and further may be blended with up to about 15 parts by weight (based on 100 parts by weight of the TPE) of aliphatic polyamide.

The preferred TPEs are further characterized in that the first-stage polymer comprises at least 70% by weight of units derived from butyl acrylate, and that the second-stage polymer comprises at least 55% by weight of units derived from methyl methacrylate. Butyl acrylate is preferred because it gives the best combination of elastic properties and low-temperature performance of monomers chosen from the alkyl acrylates. Butyl acrylate may be employed as the homopolymer, or may be copolymerized with up to about 30% of other vinyl monomers, especially other alkyl acrylates, such as methyl acrylate, ethyl acrylate and 2-ethylhexyl acrylates, alkyl methacrylates, such as butyl methacrylate, octyl methacrylate and lauryl methacrylate, vinyl esters, such as vinyl acetate, aromatic monomers, such as styrene, or vinyl nitriles, such as acrylonitrile

Further, to achieve the TPE performance, less than about 40% by weight of the two-stage polymerization should be the final stage; if more is used, some core/shell structure may develop and the properties as described herein will be adversely affected, especially elongation. For other purposes, such as impact modification of other thermoplastics, or to prepare a relatively hard TPE, somewhat higher levels may be used.

If the second-stage polymer is below about 55% by weight methyl methacrylate, its properties, as exemplified by tensile strength and hardness are not quite in as desirable a balance as when the content is above 55%. The major advantage of the higher methyl methacrylate content will be in resistance to weathering. Contents of up to about 100% methyl methacrylate may be utilized, but it becomes difficult to prevent some core/shell formation under the process conditions of the present invention unless ammonia-neutralization of the acid is conducted prior to polymerization of the methyl methacrylate, as discussed below. It is thus preferred that TPEs of the present invention are those wherein the second-stage polymer further comprises from about 20% to about 45% by weight of units derived from a vinyl aromatic monomer, such as styrene, p-methylstyrene, chlorostyrene and vinyltoluene. Preferred for cost reasons is styrene.

The TPEs comprises those compositions wherein the first-stage polymer contains from about 2 % to about 10% by weight of units derived from at least one unsaturated carboxylic acid. One preferred embodiment comprises the composition wherein the carboxylic acid is partially neutralized, preferably to at least 40%, in the form of an ammonium salt, by ammonium meaning NH₄(+), NH₃R(+), NH₂R₂(+), or NHR₃(+) where R is an alkyl group. This may be accomplished by adjustment of the pH with an appropriate amine or ammonia to at least pH=7. Metal salts in the neutralization will produce a polymer with the properties of a thermoplastic elastomer, but one which is extremely difficult to process because of its very high viscosity. The ammonium salt is present during the formation of the second-stage polymer and during conventional isolation, but on exposure to heat, ammonia or the amine is devolatilized and the final molded product will contain the copolymerized acid in the free acid form.

It is further preferred for maintenance of dimensional stability during processing that the first-stage polymer contains from about 0.2 to about 1.0 weight % of a polyfunctional unsaturated monomer. It is further preferred for maintenance of hardness during re-processing that the second-stage polymer contains from about 0.5 to about 2.0 weight % of units derived from a polyfunctional unsaturated monomer.

The present invention is derived from the finding that multi-stage acrylic polymers useful as thermoplastic elastomers can be made by an emulsion process which does not involve a deliberate swelling or equilibration step for the monomers of the to-be-formed second polymer within the first-formed polyacrylate latex. This is accomplished by conducting the second-stage polymerization by a batch or gradual-addition process with concomitant polymerization under conditions where no new particles are formed, that is, with an emulsifier level at least near, and preferably, below the critical micelle concentration. Further, the polymerization is accomplished with the use of co-monomers, such as vinyl aromatic monomers, which aromatic monomers are present as a minority of the total second-stage monomer units, and with the presence of acid groups in the first polymer stage. It is highly preferable that both the vinyl aromatic monomer and weak-base neutralized acid groups be present to ensure the best balance of physical properties for the resulting TPE.

The synthesis method employed is close to those known to the art of sequential or staged emulsion polymerization for many years. First, a crosslinked polymer of predominantly butyl acrylate is prepared by known methods, by either batch or gradual addition methods, under conditions where the particle size is controlled and where the amount of emulsifier remains at a low enough level that once particles are established early in the polymerization, no new particles are formed thereafter. A number of conventional emulsion polymerization initiators may be used; it is preferred to utilize redox initiators, which activate polymerization over a wider temperature range. A variety of emulsifiers known useful in sequential emulsion polymerization may be used; preferred for cleanliness of polymerization is sodium dodecylbenzenesulfonate. Because the latices and monomers contain ester groups, it is preferred to conduct the polymerization at pH no higher than about 8 to avoid hydrolysis. A particle size range of from about 100 nm to about 180 nm is preferred for ease of synthesis, but both larger and smaller particle sizes may be used.

As noted, the main component of the first-stage polymerization mixture is butyl acrylate. A small amount, up to about 20% by weight of ethyl acrylate is preferred to raise the tensile strength somewhat and to give a slightly stiffer TPE. If the polymer need not be exposed to low temperatures, more ethyl acrylate may be used to enhance tensile strength and stiffness further. Monomers such as styrene may be present in amounts up to about 20% by weight to raise the refractive index to match that of the second-stage polymer and improve clarity or response to addition of colorant.

By the term "polyfunctional unsaturated monomer" we intend to refer to either crosslinking monomers or graftlinking monomers, as described by Owens in US-A-3,808,180.

It is a requirement of a crosslinker monomer that it be polyethylenically unsaturated monomer copolymerizable with the other monomers of the same stage, the reactivity of its unsaturated groups being such that substantially all of them react during the same polymerization so that substantially all of the crosslinker monomer units are chemically attached only to a single stage.

It is a requirement of a graftlinker monomer that it be polyethylenically unsaturated monomer copolymerizable with the other monomers of the same stage but having sufficiently low reactivity of one or more of the unsaturated groups to allow significant residual unsaturation to remain in that stage polymer so that substantially all of the graftlinker monomer units are chemically attached to two or more polymer stages.

The distinction between graftlinker monomers and crosslinker monomers may not be clean-cut, depending on relative reactivities of double bonds of these monomers with various core and shell monomers, and on the extent of conversion. Thus, in some instances, a crosslinker monomer may participate in grafting reactions, and a graftlinker monomer may cause the core to become crosslinked.

In general therefore, in the final polymer, a crosslinking monomer is defined as polyethylenically unsaturated monomer which is chemically attached to only a single stage and graftlinking monomer is defined as polyethylenically unsaturated monomer which is chemically attached to two or more adjacent stages.

However, whatever their attachment in the final polymer, the following are to be regarded as preferred crosslinker monomers: butylene diacrylate or dimethacrylate, divinyl benzene and trimethylolpropane trimethacrylate or triacrylate; and the following are to be regarded as preferred graftlinker monomers: allyl methacrylate and diallyl maleate.

For a list of other useful crosslinker and graftlinker monomers, Owens US-A-3,808,180 should be consulted.

Owens taught the presence of hydrophilic monomers in his first-stage polymer for the purpose of controlling water-hazing when the core/shell polymers were used as impact modifiers for methyl methacrylate polymers. In his list of hydrophilic monomers are acrylic and methacrylic acid, but he does not exemplify their use, nor does he conduct or teach conducting his polymerizations under conditions which will neutralize the acid groups to leave carboxylic acid salt units in the first-stage polymer. Frankel et al. taught neutralization of the acid groups, but did not realize that such neutralization would allow synthesis of the domain structure without an equilibration step. In the present invention, it is necessary to utilize at least about 2 weight percent of copolymerizable unsaturated acid, such as acrylic acid, methacrylic acid, itaconic acid and acryloxypropionic acid, during the polymerization, and then preferably to neutralize these at least partially prior to conducting the second-stage polymerization. Neutralization may be done with such bases as ammonium hydroxide, methylamine, and the like. Neutralization with other bases may be used, including a combination with predominant ammonia neutralization, if the resulting higher processing torque is not a deterrent.

The conditions of the second-stage polymerization require that there be no excess emulsifier to form new polymer particles, that acid groups be present in the first-stage latex, for compositions very rich in methyl methacrylate that these groups be at least partially neutralized prior to initiation of the second- stage monomers, that the second-stage monomer composition be at least 55% methyl methacrylate, and that there be no deliberate equilibration step of the second-stage monomers in the presence of the first polymer particles prior to initiation. The initiation may be initiated at room temperature or higher; it may be initiated thermally or with redox initiation; and the second monomers may be added all at once or gradually.

The domains of the second-stage polymer are small, generally of the order of ca. 2 to 50 nanometers, preferably 10 to 30 nanometers, which accounts for the excellent optical properties of the isolated polymers, even if the refractive index of the second-stage domain-forming polymer is not exactly matched to that of the first-stage polymer.

It is highly preferred that the second-stage monomers contain at least one graft-linking and/or cross-linking monomer,each at the level of from about 0.2 to about 2.0 weight-percent, based on weight of all second-stage monomers.

After completion of polymerization, the polymer particles may be blended with appropriate stabilizers against light and heat. Such stabilizers may be added to the polymeric emulsion prior to isolation.

The term "assemblage" has been chosen to represent the form in which the acrylic TPE will be utilized, and on which the physical, chemical, and morphological parameters will be determined. Although a domain structure may be seen in the individual particles, it is much easier to examine an assemblage of particles for such features. The assemblage may be formed by evaporation of the emulsion, with heat if necessary, to form a coherent film, or by coagulation or otherwise de-stabilizing thepolymeric emulsion, followed by some application of heat and/or pressure to form a coherent sheet, film, molding, or extrudate.

The particles as prepared in emulsion may be isolated in a variety of ways as a dry solid. The particles are generally too soft to spray-dry, and a third hard non-crosslinked phase may be polymerized onto the particles, similar to the method described in US-A-5,066,708, to aid in isolation. Such polymers will be somewhat stiffer and harder. Partial agglomeration of the particles, so as to lower the amount of third phase polymer required for coverage, may be carried out prior to formation of the third stage and spray-drying.

A preferred isolation method is coagulation and de-watering. The emulsion may be coagulated by addition of salt, by freezing and thawing, or by addition of water-miscible solvents. "Salt" is not restricted to sodium chloride, but can include many water- soluble materials used in the coagulative art, such as sodium, potassium, calcium, zinc, aluminum or magnesium salts which are soluble, such as nitrates, chlorides, sulfates, phosphates, hypophosphites, and the like.

The wet cake may be dewatered by filtration and drying, preferably with some mechanical operation which wrings water, salts, emulsifier, etc. from the polymer prior to final drying. Equipment used for the coagulation and isolation of synthetic or natural rubber latices can be used for this purpose, such as an Anderson expeller. Continuous coagulation may be used. If a non- compacted powder is wished, the method described above for spray- dried polymer of polymerizing an outer stage of hard polymer may be used, or a staged coagulation method such as taught in Grandzol et al., U.S. Patent 4,463,131, may be used.

An especially preferred method is that of extruder coagulation followed by washing and de-watering in the liquid state. Such an operation is taught in Bortnick, US-A-3,751,527, which should be consulted for details. In this operation, the TPE is recovered as pellets which can readily be processed in final objects. Many coagulants can be used, as taught in Bortnick. A preferred coagulant for acceptable color is calcium hypophosphite, as taught in Hung, US-A-4,602,083, which should be consulted for details.

Once isolated as pellets, the acrylic TPEs may be processed by compression molding, extruding, or injection molding into final articles. Preferred is injection molding, as it is more adaptable to the production of a variety of useful objects. Means for molding are similar to those for other thermoplastic elastomers, as discussed by Legge et al.

The TPE may contain additives, such as thermal or oxidative stabilizers, anti-ozonants, dyes, colorants, fillers, lubricants, and the like, especially in used under conditions of exposure to weather. Useful for these purposes are phosphites, such as tris(nonylphenyl) phosphite, sulfur compounds, such as dilauryl thiodipropionate, waxes for lubricating purposes, such as paraffin waxes, substituted phenolic antioxidants, such as octadecyl 3,5-di-t-butyl-4-hydroxyhydrocinnamate or triethylene glycol bis 3-(3'-t-butyl-4'-hydroxy-5'-methylphenyl)propionate, and benzotriazole light stabilizers, such as 2-(2'-hydroxy-5'-methylphenyl)benzotriazole.

The acrylic TPE can be readily colored to brighter-appearing materials than conventional TPEs based on polyolefins.

For certain uses where a slightly higher tensile strength is required, the thermoplastic elastomer may be further blended with up to about 15 parts of a reinforcing additive, such as a crystalline or crystallizable polymer. Up to about 15 parts of an aliphatic polyamide are preferred, such as polycaprolactam (Nylon 6) or poly(hexamethylenediamine adipamide) (Nylon 66). The blending may best be accomplished by intimate mixing of pellets prior to processing or by adding the crystalline polymer in molten form to the dewatered molten TPE prior to isolation as pellets from the coagulation process.

Processing of the acrylic TPEs may be accomplished by the methods known to the current TPE art, such as compression molding, extrusion, and injection molding. Extrusion is useful for production of sheet, from which objects may be die-cut, or for profile-extrusion, such as for forming gaskets. Injection molding is useful for forming many useful articles of commerce.

Injection molding may be conducted for example in a Arburg Allrounder injection molding machine under conditions such as given in the Examples. Sheet extrusion may be conducted on for example a Haake twin screw extruder with a 1/8'' (6.35 mm.) sheet die (set at 154°C), barrel temperatures at 138°C, and screw speed of 60 rpm. If a single screw extruder equipped with a profile die is used, the rear zone is set at 171°C, all other zones and die set at 188°C, and the screw speed at 20 rpm.

Many useful objects may be formed from the acrylic TPEs of the present invention. Such include parts for automobiles, such as bumpers, bumper coverings (for good weatherability), air bag covers, interior trim, lip seals for air conditioners, gaskets for lighting, damping materials for support of decorative panels, rub strips, hose, gaskets, O-rings for seals, and the like; household objects, such as containers, matting, window gaskets, kitchen utensils, and the like; toys; industrial objects, such as wheels, bellows, gasket seals, handles, grips, vibrational dampers, motor mounts, and the like; medical uses, such as tubing, ear plugs, seals and gaskets, and the like; and many other uses taught for non-acrylic TPEs. For some of these uses, enhanced properties may be achieved when the present TPEs are blended with other TPEs or one or more thermoplastic polymers, such as poly(vinylidene fluoride), poly(vinyl chloride),polycarbonate, polyester, such as poly(ethylene terephthalate) or poly(butylene terephthalate), polyolefins, polymethacrylates, polystyrene, and the like.

One advantage of the acrylic TPEs as herein defined is that they may be reprocessed several times without loss in their physical properties.

The acrylic TPEs herein defined have several other uses. As they can form tough, coherent, non-tacky films from the latex, they may be used to form dipped gloves and similar objects. The isolated polymers may be used as impact modifiers for such polymers as methyl methacrylate homo- and co-polymers, poly(vinyl chloride), styrene-acrylonitrile polymers, and engineering resins, such as polycarbonate, poly(butylene terephthalate), and the like. They may also be used as damping materials to isolate vibrations, either singly, or in combination with thermosettable elastomers, similar to the methods taught in Koller et al.

With suitable formulation, the acrylic TPEs in latex form may be useful as caulks, mastics, wall coverings, cementitious additives, and the like; many such uses for which the acrylic TPE latices are useful are disclosed in Frankel et al.

The confirmation of the desired morphology can be made by either examination of the polymer particles directly, by casting a thin film with minimal heat history and then examining the film, or examining a molded part. The samples can be selectively stained to highlight either acrylate groups or styrenic groups; most effective is the ruthenium staining technique for styrene groups (Trent et al., Macromolecules, 16, 588 (1983)). For examination of particle structure, 10% of the emulsion was combined with a binder emulsion of butyl acrylate 52/methyl methacrylate 46.7/methacrylic acid 1.3 and additional emulsifier (5%), usually sodium lauryl sulfate, was added. Samples were dried to films, cryosectioned, and exposed to ruthenium tetroxide vapors for one hour.

### EXAMPLE 1.

The following example describes the preparation of a typical TPE as claimed herein. To a suitable reaction vessel equipped with stirrer, means for adding liquids, a reflux condenser, and a nitrogen sparge line is added 630 parts of water, which is sparged with nitrogen for one hour. Separately are prepared initiator solutions A, B, and C; A is 1% t-butylhydroperoxide in water; B is 1% sodium formaldehyde sulfoxylate in water; C is 1% ferrous sulfate in water. Also separately prepared is an emulsion of water 168 parts, emulsifier (sodium dodecylbenzenesulfonate) 16.0 parts, butyl acrylate (BA) 536.4 parts, ethyl acrylate (EA) 144 parts, methacrylic acid (MAA) 18 parts, acrylic acid (AA) 18 parts, diallyl maleate (DAlM) 2.9 parts, and butylene glycol diacrylate (BGDA) 0.7 parts, which stirred emulsion along with 115 parts of rinse water is divided into weighed portions ("shots").

To the water in the reaction vessel is added 2.8 parts of sodium dodecylbenzenesulfonate; the sparge is stopped, 45 parts of the monomer emulsion is added, then 4.3 parts of solution A, then 2.8 parts of solution B, then 0.5 parts of solution C with a 5 part water rinse, then 23 parts rinse water. An exotherm occurs to 31°C; 15 minutes after the peak of the exotherm is added 90 parts of the monomer emulsion and 23 parts of rinse water, then is added 8.6 parts solution A and 5.4 parts solution B. An exotherm occurs to 43°C; 15 minutes after the peak of the exotherm is added 180 parts of the monomer emulsion and 23 parts of rinse, followed by 17.1 parts solution A and 10.8 parts solution B. An exotherm occurs to 57°C. Ten minutes after the peak of the exotherm, is added 360 parts of the monomer emulsion and 23 parts rinse, followed by 34.2 parts of solution A and 22.5 parts solution B. An exotherm occurs to 75°; 15 minutes after the peak of the exotherm, the reaction is cooled to 50°C., and then is added 229 parts of the monomer emulsion and 23 parts of rinse, then 20.7 parts solution A and 14.5 parts solution B. Fifteen minutes after the final exotherm is added 0.13 parts of t-butylhydroperoxide in 10 parts water and 0.09 parts of sodium formaldehyde sulfoxylate in 10 parts of water; no further exotherm is seen.

Separately is prepared an emulsion of 23 parts water, 2 parts sodium dodecylbenzenesulfonate, 54 parts styrene (St), 124.2 parts methyl methacrylate (MMA), 1.26 parts divinylbenzene (DVB), and 0.54 parts butylene glycol diacrylate. The first-stage emulsion is heated to 85°C., and the second monomer emulsion mix is added over 30 minutes. At the same starting time an initiator solution of sodium persulfate (0.9 parts) in 36 parts water is added over 35 minutes. The reaction mixture is stirred 15 minutes longer at 85°C., and then is "chased" twice in the same manner as in Stage 1. The emulsion is cooled and filtered through cheesecloth to remove any gels.

### EXAMPLE 2.

The following example describes the preparation of a typical TPE as claimed herein, where the first-stage acid-containing polymer is neutralized prior to conducting the second-stage polymerization. The first-stage polymerization is conducted as in Example 1. Diluted (ca. 14% ) ammonia is added dropwise with stirring of the emulsion until the pH reached 7.4. The emulsion is then heated to 85°C., and the second-stage reaction conducted as in Example 1.

### EXAMPLE 3.

The following example describes the isolation, molding, and evaluation of a combination of three repeat preparations of Example 2. A portion of one of the emulsion is isolated by freezing in a Dry-Ice/acetone batch, thawing, and filtering, followed by vacuum-oven drying at 60°C. The coagulated sample is pelletized in a single-screw extruder, and then the pellets are injection molded in a Arburg Allrounder injection molding machine with a 1.5 ounce (42.6 gram) capacity and 28 ton (2.54 x 10(4)) clamping force, with the nozzle set at 154°C, zone 3 at 149°C, zone 2 and Zone 1 at 138°C, and the mold at 38°C. An injection molding time of one second, holding time of 15 seconds, and cycle time of 32 seconds is typical of useful conditions. The injection pressure is 3445 kPa, and the screw speed 200 rpm. The mold is a standard ASTM family mold. The moldings are smooth and attractive in appearance. The TWLT is 73% and the haze value 70 %.

The remaining combined emulsions are isolated by coagulation as disclosed in the Hung reference in a 3.2 mm Welding Extruder contra-rotating non-intermeshing twin-screw extruder, except that the coagulation is accomplished in a single-screw extruder which then feeds the coagulated polymer and aqueous medium into the dewatering zone. The coagulant is calcium hypophosphite/ acetic acid (10% on hypophosphite), total amount 1% percent on latex solids. After removal of water and any volatile residuals, stabilizers are added prior to extrusion, such as tris(nonylphenyl) phosphite, dilauryl thiodipropionate, hydroxybenzotriazoles, etc. The isolated pellets are molded as described above. Samples reported are cut across the injection molding direction.

| Sample | Hardness (Shore A) | Tensile Strength (kPa) | Strain at Break (%) |
|---|---|---|---|
| freeze/thaw | 61 | 6530 | 387 |
| extruder-coagulated | 43 | 6410 | 313 |

### EXAMPLE 5.

The following example describes the preparation of a typical TPE as claimed herein, where the first-stage acid-containing polymer contains only methacrylic acid, which acid groups are neutralized prior to conducting the second-stage polymerization, and where the second-stage monomer addition is conducted in two parts. The first-stage polymerization is conducted as in Example 1, but with the acrylic acid replaced with an equivalent amount of methacrylic acid. Diluted (ca. 14% ) ammonia is added dropwise with stirring of the emulsion until the pH reached 7.4. The emulsion is then heated to 85°C., and the second-stage reaction conducted by gradual addition as in Example 1.

The polymer of Example 5 is isolated by coagulation in a 0.8 inch diameter (20.3 mm.) contra-rotating tangential twin-screw extruder as in Example 4, and then molded in a 40-ton Arburg injection molder into ASTM test sections as described above. Pellets are also milled and then compression molded. The molded parts had properties, as determined by standard ASTM test methods, as follows:
Optical properties: Total Light Transmission 60%, haze 97%, 60° gloss 9, surface smooth. Compression set after 22 hours is 39%. Brittle temperature is -37°C. Physical properties on compression molded samples and on injection molded samples cut along (+) the machine direction and cut across (-) the machine direction.

| Mode | Hardness | Strain at break,% | Strength at break,kPa | Modulus, 100%, kPa |
|---|---|---|---|---|
| Compress. | 44 | 455 | 7682 | 1550 |
| Inj.,(+) | 49 | 146 | 2391 | 1998 |
| Inj.,(-) | 49 | 451 | 6235 | 1523 |

Samples are aged at 125°C. in an air oven for 72 hours and physical properties re-measured.

| Mode | Strain Hardness | Strength at break,% | Modulus, at break,kPa | 100%,kPa |
|---|---|---|---|---|
| Inj.,(+) | 21 | 340 | 4072 | 1268 |
| Inj.,(-) | 21 | 494 | 6759 | 1261 |

Samples are treated with various liquids for 72 hours and the degree of weight change and the 100% modulus are reported below by samples measured as "Injection, (-)". Parallel results are obtained from the material measured in the (+) mode. Except for the ASTM #3 oil at elevated temperature, the thermoplastic elastomer is quite resistant to liquids.

| Solvent, temperature | % weight change | 100% Modulus, kPa |
|---|---|---|
| Control | -- | 1523 |
| Water, r.t. | 1.6 | 1164 |
| Water. 65°C. | 3.0 | 1302 |
| ASTM Oil #1, r.t. | 0.0 | 1647 |
| ASTM Oil #1, 65°C. | 1.9 | 1371 |
| ASTM Oil #2, r.t. | 0.7 | 1592 |
| ASTM Oil #2, 65°C. | 3.0 | 1523 |
| ASTM Oil #3, r.t. | 1.7 | 1502 |
| ASTM Oil #3, 65°C. | 14.7 | 861 |

### EXAMPLES 6-8

Polymers are prepared as in Example 5, which give on molding similar physical properties to that of Example 5. In Example 6, all of the butylene glycol diacrylate is removed from both stages; further, the second-stage is split into two portions, all the divinylbenzene being in the first feed, and n-dodecyl mercaptan (0.1% on second-stage monomer) being added in the second feed. Example 7 uses 10-times the amount of mercaptan, but otherwise repeats Example 6. In Example 8, there is no butylene glycol diacrylate in either stage; it is replaced by allyl methacrylate in the second stage.

### EXAMPLE 9

A polymer of the composition BA/EA/MAA/DALM/ BGDA//MMA/St/DVB/BGDA = 80 (74.5/ 20/ 5/ 0.4/ 0.1// 20 (69/ 30/ 0.7/ 0.3) is prepared in a manner similar to that of Example 1, that is, with no neutralization until completion of the second-stage polymerization, no mercaptan, no equilibration period before polymerization of the second-stage monomers, and gradual addition of the second-stage monomers; however, no acrylic acid is employed. Five shots of activator (B) and catalyst (A) are employed in the first-stage polymerization.

The polymer is isolated, molded and tested as in Example 5.

### EXAMPLE 10

The polymer of Example 9 in latex form is examined by transmission electron microscopy (Hitachi H-7000 STEM at 100KeV accelerating voltage). At 100,000 X magnification, the emulsion particles within the binder clearly show interpenetration of the polyacrylate first stage by domains of the second, styrene-containing polymer, with domain sizes of the second polymer between 20 to 30 nanometers, the particle size of the latex polymer particles being about 150 nm. Some of the second-stage polymer forms a shell at the surface of the particle.

The morphology of extruded pellets and of molded parts are similar, showing a continuous structure of the acrylate first-stage polymer (resulting from the thermal history of the processing steps, which eliminates the individual latex polymer structure), and domains of the styrene-containing second stage polymer.

The polymers of Examples 1-4 or 6-8 upon similar microscopic examination show a similar structure, wherein the second-stage polymer is located as separate domains primarily within the continuous matrix of the first-stage polymer.

### EXAMPLES 11- 13

These Examples describe preparations of TPEs where the second polymer is essentially homopolymer of methyl methacrylate. In a manner similar to Examples 1 and 9, staged polymers were made of the composition BA/EA/MAA/AA/DAlM/BGDA/ / MMA/EA/BGDA= 80 (x/20/y/z/0.4/0.1)//20 (97.9/1.1/1.0). The variables were: presence or absence of acid, and neutralization or not after the first-stage. For Example 11, x= 79.5, y=z=0, pH= 3; for Example 12, x= 74.5, y=z=2.5, pH=3; for Example 13, x=74.5, y=z=2.5, pH=7.5. The values shown indicate that the hardness of TPE formed from Example 13 is low and desirable, and that elongation is higher. Examples 11 and 12 are stiffer and do not elongate as well. (Injection molding values are (+), although the combination of acids produces less anisotropy than when only methacrylic acid is used.)

| Example | Compression/ Injection Tensile, kPa | (C/I) Elong.,% | Hardness, C/I |
|---|---|---|---|
| 11 | 5880/ 4470 | 131/ 55 | 87/ 85 |
| 12 | 7965/ 4930 | 294/ 140 | 76/ 75 |
| 13 | 6330/ 4290 | 391/ 318 | 48/ 50 |

### EXAMPLES 14- 17

Examples 12 and 13 are repeated, but at 10% second stage (Examples 14 and 15), and at 30% second stage (Examples 16 and 17). Again the data indicate softer polymer with better elongation, with properties desired in a TPE, is formed with the acid groups neutralized prior to the second stage polymerization.

| Example | Compression/ Injection Tensile, kPa | (C/I) Elong.,% | Hardness, C/I |
|---|---|---|---|
| 14 | 3400/ 2921 | 451/ 413 | 31/ 36 |
| 15 | 2650/ 2110 | 502/ 509 | 27/ 26 |
| 16 | 9680/ 7550 | 142/ 146 | 88/ 86 |
| 17 | 9350/ 5600 | 277/ 263 | 80/ 71 |

## Claims

1. An acrylic thermoplastic elastomer comprising at least 45 weight percent of units derived from butyl acrylate and at least 7 weight percent of units derived from methyl methacrylate, having the following properties:
a. compression set less than 40 percent;
b. tensile strength at least 3800 kPa;
c. tensile elongation at break of at least 300 %;
d. a brittle temperature below -20°C,
and having been formed from an assemblage of multi-stage cross-linked emulsion-prepared polymer particles, the first stage being a polymer containing more than 50% by weight of units derived from butyl acrylate, 2 weight percent to 10 weight percent of units derived from copolymerizable unsaturated carboxylic acid and from 0.2 to 1.0 weight % of units derived from polyfunctional unsaturated monomer other than butadiene, the second-stage polymer having been formed in the presence of the first-stage polymer without equilibration of the monomers which polymerize to form the second-stage polymer, the second-stage polymer containing more than 50 % by weight of units derived from methyl methacrylate, having been formed as cross-linked domains within the first polymer matrix, being less than 40 parts by weight of the total stages of the emulsion polymer particle, being free from units derived from maleimide or its N-substituted derivatives, and containing from 0.5 to less than 5 weight percent of units derived from polyunsaturated monomer.

2. An elastomer of Claim 1, further exhibiting a transparency of greater than 35 %, wherein the multi- stage emulsion-prepared polymer particle has a diameter of less than 200 nm.

3. An elastomer of Claim 1 or 2, further containing at least one of; filler, plasticizer, anti-oxidant, anti-ozonant, ultraviolet stabilizer, pigment or dye.

4. An elastomer of any preceding Claim, further containing up to 15 parts by weight of aliphatic polyamide.

5. An elastomer of any preceding Claim, further characterized in that the first-stage polymer comprises at least 70% by weight of units derived from butyl acrylate, and that the second-stage polymer comprises at least 55% by weight of units derived from methyl methacrylate.

6. An elastomer of Claim 5, wherein the second-stage polymer further contains from 20% to 45% by weight of vinyl aromatic monomer units.

7. An elastomer of any preceding Claim wherein the first-stage polymer contains from 2 to 10 % by weight of units derived from at least one unsaturated carboxylic acid, said carboxylic acid having been at least 40 % neutralized in the form of an ammonium salt at the time of formation of the second stage.

8. An elastomer of any preceding Claim wherein the second-stage polymer contains from 0.5 to 2.0 weight % of units derived from polyfunctional unsaturated monomer.

9. A molded or extruded article formed from an elastomer of any of the preceding claims.
